# EUROPEAN PATENT APPLICATION

(11) **EP 4 807 644 A1**
(43) Date of publication of application: **16.09.2026**
(21) Application number: 26163673.2
(22) Date of filing: 10.03.2026
(51) Int. Cl.: G06Q 10/0836, H04W 12/06, G07F 17/12

(54) **SMART ITEM PICK-UP**

(30) Priority: 13.03.2025 US 202519079388
(71) Applicant: Ricoh Company, Ltd., Tokyo 143-8555 (JP)
(72) Inventor: BLOHM, Nicole, Boulder, CO, 80301-9270 (US)
(74) Representative: SSM Sandmair

(57) **Abstract**

The present disclosure relates to a smart item pick-up system. A user device may be determined to be at a location of a user device is within a predetermined proximity of a storage system, wherein the user device is associated with a user account. A selection of an item may be received from the user device. A storage unit, of the storage system, that stores the item may be identified. An identification of the storage unit, and a command to cause access to the storage unit to be enabled may be transmitted to the storage system.

## Description

### BACKGROUND OF THE INVENTION

### 1. Field of the Invention

The present disclosure relates to package locker systems.

### 2. Description of the Related Art

Automated package locker systems are becoming increasingly common in package delivery. Automated package locker systems can include a bank of package lockers that can be accessed by interacting with a locker kiosk. These systems can be used to automate both the processes of dropping-off and picking-up a package. For example, instead of delivering a package directly to the residence of a recipient, a last-mile courier can deliver a package to a package locker. The recipient can later authenticate at a locker kiosk using a barcode or other identifier and pick up the package from the package locker. As another example, a sender can interact with a locker kiosk to drop-off a package in a package locker, and a courier can later collect the package from the package locker for shipment to a recipient.

Using a package locker system for package pick-up, however, presents several challenges. For example, when a user attempts to pick up a package from a package locker, the user typically must present an identifier like a passcode or barcode to pick up a package. This means that the user must locate the identifier by, for instance, searching the user's email; and the user may not be able to pick up the package if the identifier is lost. The user must then locate a kiosk and scan the barcode or enter the passcode to open the locker. The user then has to locate the opened locker, which can be tedious in locker banks with many lockers, which can in practice limit the number of lockers in a locker bank. The time it takes a user to locate the lockers can also present an opportunity for the user's package to be stolen in the meantime.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

### SUMMARY OF THE INVENTION

According to at least one aspect of the present disclosure, a method includes:
determining that a location of a user device is within a predetermined proximity of a storage system, wherein the user device is associated with a user account;
receiving a selection of an item from the user device;
identifying a storage unit, of the storage system, that stores the item; and
transmitting, to the storage system, an identification of the storage unit, and a command to cause access to the storage unit to be enabled, wherein the method is performed by one or more computing devices.

### BRIEF DESCRIPTION OF THE DRAWINGS

In the drawings:
FIG. 1 illustrates a block diagram depicting an example of a network environment, in an embodiment.
FIGS. 2A-2D are diagrams depicting various examples of user interfaces rendered in a display of a user device by a storage application, in various embodiments.
FIG. 3 is a sequence diagram that depicts an example of the operation of a portion of the components of a network environment, in an embodiment.
FIG. 4 is a block diagram that illustrates a computer system upon which an embodiment of the invention may be implemented.
FIG. 5 is a block diagram of a basic software system that may be employed for controlling the operation of a computing system.

### DESCRIPTION OF THE PREFERRED EMBODIMENTS

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

### GENERAL OVERVIEW

The present disclosure relates to a smart item pick-up system. A user may desire to pick up one or more items from a storage system having a plurality of storage units, such as a bank of package lockers. A user device may receive a notification that one or more items have been stored in a storage system and are ready for pick-up by a user of the user device. The user device may obtain a selection or confirmation of one or more items that the user intends to pick up; the user device may provide this information to an automated system. The automated system may access a database to identify a storage unit of the storage system that stores the one or more items. The automated system may cause a device managing the storage system to enable the user to remove the items from the storage unit. The automated system may be notified when the items have been removed from the storage unit.

In some implementations, the application may present an augmented reality (AR) overlay to assist a user in picking up one or more items. For example, when the user arrives at the location of the storage system, the user can cause the application to access an image capture device. The image capture device may capture imagery of the user's environment, including storage units of the storage system. In a display of the user device, the application may present an AR overlay on the captured imagery that highlights or otherwise emphasizes a storage unit that stores the one or more items. The AR overlay may also present one or more visual guides that direct the user to the location of the storage unit, information regarding the one or more items, and potentially other visual aids.

### SYSTEM OVERVIEW

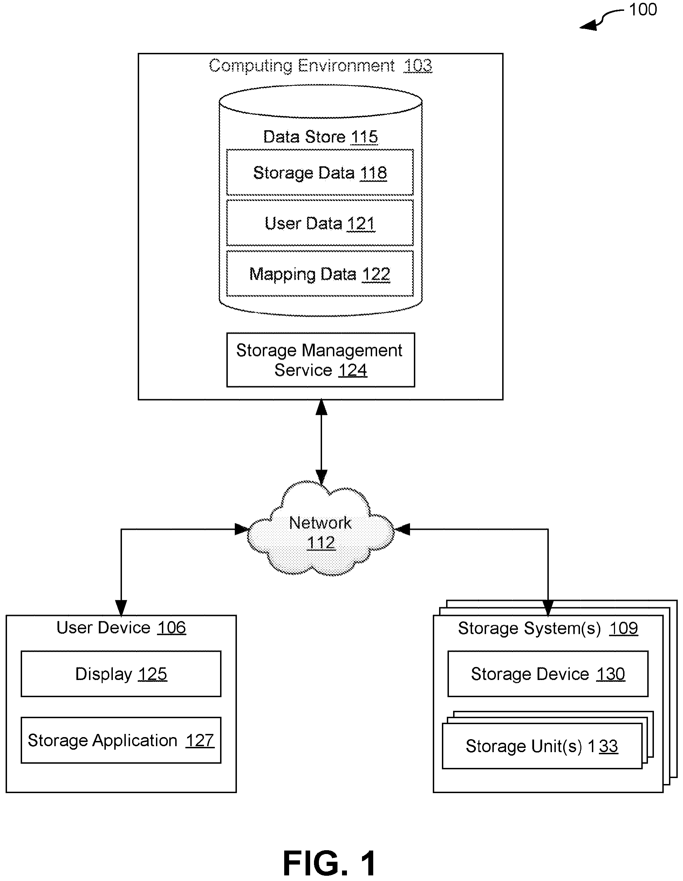

FIG. 1 illustrates a block diagram depicting an example of a network environment 100, in an embodiment. The network environment 100 may include a computing environment 103, one or more user devices 106, one or more storage systems 109, and potentially other components in communication via a network 112. The various components of the network environment 100 may interact using an application programming interface (API).

The network 112 includes the Internet, intranets, extranets, wide area networks (WANs), local area networks (LANs), wired networks, wireless networks, other suitable networks, or any combination of two or more such networks. The networks may include satellite networks, cable networks, Ethernet networks, and other types of networks.

The computing environment 103 may include a computing device, such as a server computer, that provides computing capabilities. Alternatively, the computing environment 103 may employ multiple computing devices that are arranged in one or more server banks or computer banks. In one example, the computing devices may be located in a single installation. In another example, the computing devices for the computing environment 103 may be distributed among multiple different geographical locations. In one case, the computing environment 103 may include multiple computing devices that together may form a hosted computing resource or a grid computing resource. In addition, the computing environment 103 may operate as an elastic computing resource where the allotted capacity of computing-related resources, such as processing resources, network resources, and storage resources, may vary over time. In other examples, the computing environment 103 may include or be operated as one or more virtualized computer instances that may be executed to perform the functionality that is described herein.

Various data may be stored in a data store 115 that may be accessible to the computing environment 103. The data store 115 may be representative of one or more data stores. The data stored in the data store 115 may be associated with the operation of the various applications or functional entities described below. Data stored in the data store 115 may include, for example, storage data 118 and user data 121.

Various applications or other functionality may be executed in the computing environment 103. Components executed in the computing environment 103 may include a storage management service 124 and other applications, services, processes, systems, engines, or functionality not discussed in detail herein.

The user device(s) 106 may represent one or more user devices 106 coupled to the network 112. The user device 106 may include a processor-based system, such as a computer system, that may include a desktop computer, a laptop computer, a personal digital assistant, a cellular telephone, a smartphone, a set-top box, a music player, a tablet computer system, a game console, an electronic book reader, or any other device with like capability. The user device 106 may also be equipped with networking capability or networking interfaces, including a localized networking or communication capability, such as a near-field communication (NFC) capability, radio-frequency identification (RFID) read or write capability, or other localized communication capability. The user device 106 may include one or more displays 125, such as liquid crystal displays (LCDs), gas plasma-based flat panel displays, organic light emitting diode (OLED) displays, electrophoretic ink ("E-ink") displays, projectors, or other types of display devices. In some instances, the display 125 can be a component of the user device 106 or can be connected to the user device 106 through a wired or wireless connection.

In addition, the user device 106 may be configured to execute various applications, such as the storage application 127. The storage application 127 and potentially other applications may access network content served up by the computing environment 103 or other servers, thereby rendering a user interface on the display 125. To this end, the storage application 127 may include a browser or a dedicated application, and the user interface may include a network page, an application screen, or other interface. Further, the storage application 127 may include device email applications, management applications, enterprise applications, social networking applications, word processors, spreadsheet applications, media viewing applications, or other applications.

The storage system(s) 109 may represent a system of a plurality of storage units 133 that are managed by a storage device 130. The storage device 130 may manage the storage units 133 of a storage system 109. The storage device 133 may represent one or more computing devices coupled to the network 112. The storage device 130 may include a processor-based system, such as a computer system, that may include a desktop computer, a laptop computer, a personal digital assistant, a cellular telephone, a smartphone, a set-top box, a music player, a tablet computer system, a game console, an electronic book reader, or any other device with like capability. The storage device 130 may also be equipped with networking capability or networking interfaces, including a localized networking or communication capability, such as a near-field communication (NFC) capability, radio-frequency identification (RFID) read or write capability, or other localized communication capability. The storage device 130 may be in data communication with each of a plurality of associated storage units 133 via a wired or wireless connection.

### STORAGE MANAGEMENT SERVICE

The storage management service 124 may manage the pick-up of items from the storage system(s) 109. When one or more items have been stored by a storage system 109 for pick-up by a user, the storage management service 124 may notify a user device 106 associated with that user of the one or more items for pick-up. The notification may include, for example, an identifier of the specified storage system 109, an identifier of a user account associated with the user from the user data 121, an identifier of a storage unit 133 storing the one or more items, and information about a shipment of the one or more items to the user. The information about the shipment may include, for example, a name and address of a sender, a courier service, and a shipment speed.

The storage management service 124 may receive a pick-up request from the user device 106 when a user is ready to pick up the one or more items that are stored by a storage system 109. The pick-up request may include information like, for example, an identifier of a user account associated with the user device 106, identifier(s) of the one or more items, an identifier of the storage system 109, and an identifier of a storage unit 133 storing the one or more items. Before or upon receiving the reservation request, the storage management service 124 may authenticate the user device based on credentials for the user account stored in the user data 121.

The storage management service 124 may identify which storage unit 133 of the storage system 109 that stores the one or more items. The storage management service 124 may identify such a storage unit 133 from the storage data 118 using information included in the pick-up request. The storage management service 124 may notify a storage device 130 associated with the storage system 109 that the user is ready to pick-up the one or more items from the storage system 109. This notification may include an identifier of the identified storage unit 133 from the storage data 118, as well as potentially other data regarding the user account or the one or more items. When provided to the storage device 130, the notification may also be accompanied by instructions to enable access to the identified storage unit 133. In addition, while this and the following discussion may refer to a singular storage unit 133, the features and functionality discussed may likewise apply to cases where the user is picking up multiple items from multiple storage units 133.

The storage management service 124 may receive a notification from the storage device 130 when the one or more items have been removed from the identified storage unit 133. The storage management service 124 may then update the storage data 118 to reflect that the identified storage unit 133 is now unoccupied and that the one or more items have been picked up.

The storage data 118 may represent data associated with the storage system(s) 109. The storage data 118 may include, for each storage unit 133, an identifier of the storage unit 133, an identifier of the storage system 109, a status of the storage unit 133 (occupied, unoccupied, etc.), information regarding the storage of items in the storage unit 133, if any, and potentially other data. The information regarding the storage of items in the storage unit 133 may include, for example, information about one or more items that are stored within the storage unit 133 and an identifier of a user account associated with the reservation. Data for the storage units 133 of each storage system 109 may be grouped together in, for instance, a database table.

The user data 121 may represent account data associated with user(s) of the user device(s) 106. The user data 121 may include credentials used to authenticate the user of the storage application 127 with the storage management service 124. The credentials may include a username and password, a certificate, a biometric, or any other credential that may be used to authenticate the identity of the user device 106 as corresponding to a particular user account.

The mapping data 122 may represent three-dimensional mapping data for each of the storage systems 109. The mapping data 122 for an individual storage system 109 may comprise data representing a three-dimensional representation of the storage units 133 and the environment surrounding the storage units 133. The mapping data 122 may be used by the user device 106 to generate an augmented reality (AR) overlay on imagery of storage units 133 and their environment.

### STORAGE APPLICATION

The storage application 127 may be executed to initiate and facilitate the process to pick up one or more items from a storage system 109. The pick-up process may begin after the storage application 127 receives a notification that one or more items can be picked up from a particular storage system 109. The notification may include, for example, an identifier of the specified storage system 109 and/or a location such as a street address, an identifier of the one or more items available for pick-up, an identifier of a storage unit 133 storing the one or more items, and information about a shipment of the one or more items to the user.

The storage application 127 may allow the user to proceed with the pick-up process when the storage application 127 detects that the user device 106 is within a predefined proximity of the storage system 109. After being notified that one or more items are ready for pick-up from a storage system 109, the storage application 127 may present a notification to the user that includes, for example, an identification (e.g., a name and location) of the storage system 109 that is storing the one or more items for pick-up, an identification of the one or more items for pick-up, and potentially other information about the pick-up. The notification may advise the user to proceed to the location of the storage system 109. The notification may be a push notification to the user device 106, an SMS or other message sent to the user device 106, an email message sent to an email address associated with a user account of the user, or any other suitable presentation of information regarding the pick-up.

The storage application 127 may allow the user to continue the pick-up process when the storage application 127 detects that the user device 106 is within a predefined proximity of the storage system 109 storing the one or more items. The storage application 127 may use location services or other geolocation systems provided by an operating system of the user device 106.

When the user device 106 is within the predefined proximity of the storage system 109, the storage application 127 may obtain selection of one or more items that the user intends to pick up from the storage system 109. The storage application 127 may render, in the display 125, a user interface that enables the user to select one or more items for pick up. The user interface may enable the user to select some or all of any items that are available for pick up in that storage system 109. The user interface may identify the items by various means, such as, for example, a description of the items, an identification of a sender of the item shipment, or any other suitable identifier.

The storage application 127 may generate a pick-up request and provide the pick-up request to the storage management service 124. The pick-up request may include, for example, an identifier of the user account, identifier(s) of the one or more items, an identifier of the specified storage system 109, and/or an identifier of a storage unit 133 storing the one or more items.

The storage application 127 may then receive, from the storage management service 127 or the storage device 130, a notification that identifies a storage unit 133 of the storage system 109 that stores the one or more items. The notification may include an identifier of the identified storage unit 133.

In some implementations, the storage application 127 may allow the user of the user device 106 to request access to the identified storage unit 133 to be enabled. For example, the storage application 127 may present a prompt in the display 125 that allows the user to input a selection to enable access to the identified storage unit 133. The storage application 127 may allow the user to request enable access to the identified storage unit 133 upon receiving notification of the identified storage unit 133, upon detecting that the user device 106 is within a predefined proximity of the selected storage system 109, or upon detecting that the user device 106 is within a predefined proximity of the identified storage unit 133. When the user requests to enable access to the identified storage unit 133, the storage application 127 may transmit a request directly to the storage device 130 or to the storage management service 124. In the latter case, the storage management service 124 may send, to the storage device 130, instructions to enable access to the identified storage unit 133. In other implementations, the storage device 130 may allow access to the identified storage unit 133 to be enabled without input from the storage application 127 beyond a notification that the user device 106 is within a predefined proximity of the storage system 109.

In some implementations, the storage application 127 may present an augmented reality (AR) overlay in the display 125 to assist the user in locating the identified storage unit 133. The storage application 127 may enable the user to access the AR overlay after the storage application 127 is notified of the identified storage unit 133. The storage application 127 may access an image capture device of the user device 106 to capture imagery of the user's surroundings (e.g., the live preview feed generated by the image capture device, or a recorded photo or video). Within the captured imagery, the storage application 127 may highlight or otherwise visually distinguish the identified storage unit 133 and present visual cues that guide the user to the location of the identified storage unit 133. The storage application 127 may obtain mapping data 122 for the storage system 109 from the storage management service 127. The storage application 127 may use the mapping data 122, the captured imagery, and location data for the user device 106 to determine a position of the user device 106 within the environment of the storage system 109 and render the AR overlay based on the user's position. The storage application 127 may analyze the imagery captured by the image capture device to correlate features of the environment that are visually represented in the imagery with entities in the mapping data 122 for the storage system 109 (e.g., particular storage units 133).

### STORAGE SYSTEM

A storage system 109 may include a storage device 130 and various storage units 133 located in a single geographical location. The storage units 133 may be arranged in a bank configuration or other suitable grouping. The storage system 109 and each of the storage units 133 may be uniquely identified by an identifier.

The storage device 130 may cause access to a storage unit 133 to be enabled and/or disabled. For example, the storage device 130 may provide a command to a storage unit 133 that instructs the storage unit 133 to enable or disable access to the storage unit 133. In some implementations, the storage device 130 may cause access to the storage unit 133 to be enabled in response to receiving a notification that a user intends to pick up one or more items from a storage unit 133 identified by the notification, which may include instructions to enable access to the identified storage unit 133. In other implementations, the storage device 130 may cause access to the storage unit 133 to be enabled in response to detecting that the user device 106 is within a predefined proximity of the storage system 109. In still other implementations, the storage device 130 may cause access to the storage unit 133 to be enabled in response to receiving a request to enable access from the user device 106 (either directly from the user device 106 or via the storage management service 124). In some implementations, the storage device 130 may cause access to the storage unit to be disabled if access has remained enabled for a predetermined period of time.

The storage device 130 may determine that one or more items have been placed in a storage unit 133. For example, the storage device 130 may make this determination based on receiving a signal from a storage unit 133 when one or more items have been removed from the storage unit 133. In response, the storage device 130 may notify the storage management service 124 that one or more items have been removed from the storage unit 133. This notification may include, for instance, an identifier of the storage system 109 and an identifier of the storage unit 133.

The storage unit(s) 133 may represent a compartment capable of storing one or more items. Each storage unit 133 may, together with one or more other storage units 133, be associated with a storage device 130, together with which they may comprise a storage system 109. A storage unit 133 may also include a computing device that is in data communication with the storage device 130 via a wired or wireless connection.

A storage unit 133 may be enclosed or unenclosed. In some implementations, if enclosed, the storage unit 133 may include an access control device such as a door, hatch, or other device that is capable of enabling and/or disabling access to an interior of the storage device 133. When used herein, the phrases "enable access to a storage unit 133" and "disable access to a storage unit 133" and similar phrases may, in examples where the storage unit 133 is enclosed, mean causing the access control device of the storage unit 133 to enable and disable access to the interior of the storage device 133, respectively. The access control device may be operated to enable or disable access to the storage unit 133 by the computing device of that storage unit 133. The computing device of the storage unit 133 may operate the access control device upon receiving a command from the storage device 130. The computing device of the storage unit 133 may notify the storage device 130 whenever access to the storage unit 133 has been enabled or disabled.

When one or more items have been removed from an interior of a storage unit 133, the computing device of the storage unit 133 may provide a signal indicating as much to the storage device 130. The computing device may determine that an item has been removed from the storage unit 133 when, for example, the access control device of the storage unit 133 has been operated to enable and then soon thereafter to disable access to the storage unit 133 (e.g., the computing device operates the access control device to enable access and then the computing device or the user operates the access control device to disable access), or vice-versa. As another example, the computing device may determine that an item has been removed from the storage unit 133 when the access control device of the storage unit 133 has been operated to enable access to the storage unit 133 and then a predetermined amount of time has passed (e.g., if the access control device is unable to be automatically operated to disable access to the storage unit 133 and the user neglects to operate the access control device to disable access). In either of these situations, an item has presumably been removed from the storage unit 133. As another example, the computing device may determine that an item has been removed from the storage unit 133 using a scale, a digital camera, proximity sensor, other instrument capable of sensing the presence and absence of one or more items in the interior of the storage unit 133. To illustrate, if a user removes or more items from the storage unit 133, the scale or other instrument may detect the sudden absence of the one or more items and provide a signal to the computing device of the storage unit 133.

### EXAMPLE USER INTERFACES

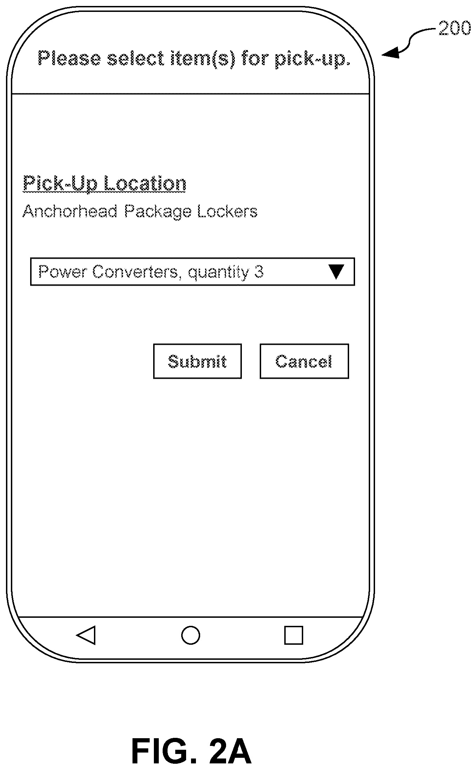

FIGS. 2A-2D are diagrams depicting various examples of user interfaces rendered in the display 125 of the user device 106 by the storage application 127, in various embodiments. The user interfaces depicted in FIGS. 2A-2E may be related to functionality described above with respect to FIG. 1. The user interfaces depicted in the examples of FIGS. 2A-2E are simply illustrative examples, however, and the functionality described may be implemented using any suitable user interface.

FIG. 2A is a diagram depicting an example of a user interface 200 for selecting one or more items for pick-up from a storage system 109. The user interface 200 prompts the user to select one or more items for pick-up from a particular storage system 109. The storage application 127 presents the user interface 200 when the user device 106 is within a predefined proximity of the particular storage system 109. The user interface 200 enables the user to select the item that is available for the user to pick up from the storage system 109 (which could, potentially, include multiple items). The user interface 200 identifies the item available for pickup using a description of the item, but any suitable identifier for one or more items available for pick-up may be used.

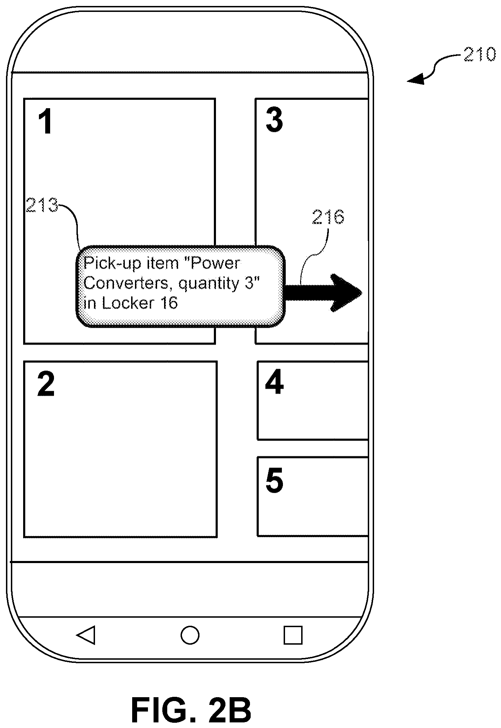

FIG. 2B is a diagram depicting an example of an augmented reality user interface 210 for guiding the user to a location of a storage unit 133. The augmented reality user interface 210 presents imagery generated by an image capture device of the user device 106 (e.g., the live preview feed generated by the image capture device, or a recorded photo or video). The augmented reality user interface 210 also presents, overlaid on the imagery, visual elements that help the user to find the storage unit 133 that has been for the user's item. One visual element is a message window 213 that identifies the storage unit 133, as well as the item that is to be picked up from the storage unit 133. Another visual element is a directional guide 216 that directs the user towards the storage unit 133. The storage application 127 generates the directional guide 216 by correlating the imagery captured by the image capture device with mapping data 122 obtained from the storage management service 124. By doing so, the storage application 127 determines the user device's 106 current position relative to the storage unit 133, which is used to generate the directional guide 216. For example, the storage application 127 could determine that the imagery shows several storage units 133 labeled "1", "2", "3", "4", and "5"; the storage application 127 may determine the current position of the user device 106 based on the apparent position and orientation of the several storage units 133 relative to the user device 106. The storage application 127 may then determine, using mapping data 122 obtained from the storage management service 124, the location of the storage unit 133 storing the item relative to those storage units 133. In some implementations, however, the storage management service 124 may make this determination itself using location data for the user device 106 obtained from the storage application 127; the storage management service 124 may then provide the result of the determination to the storage application 127. The storage application 127 may then generate the directional guide 216 based on the location of the storage unit 133 relative to the current position of the user device 106 or relative to the storage units that are currently in the view of the camera or imagery.

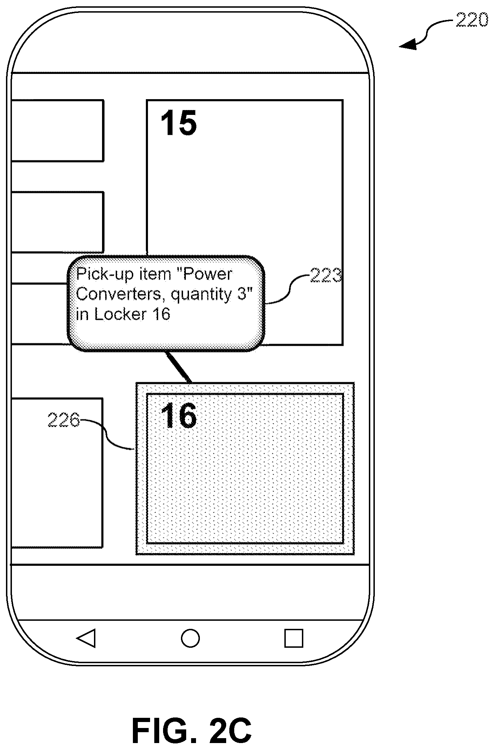

FIG. 2C is a diagram depicting an example of an augmented reality user interface 220 for visually identifying a storage unit 133. The augmented reality user interface 220 presents imagery generated by an image capture device of the user device 106 (e.g., the live preview feed generated by the image capture device, or a recorded photo or video). The augmented reality user interface 220 also presents, overlaid on the imagery, visual elements that help the user to identify the storage unit 133. These visual elements include a message window 223 that identifies the storage unit 133 and the item to be picked up, as well as a visual highlight 226 overlaid on the visual representation of the storage unit 133. The storage application 127 generates the visual elements by correlating the imagery captured by the image capture device with the mapping data 122. By doing so, the storage application 127 identifies the storage unit 133 within the imagery and renders the visual highlight 226 in the display 125 over the portions of the imagery that correspond to the storage unit 133.

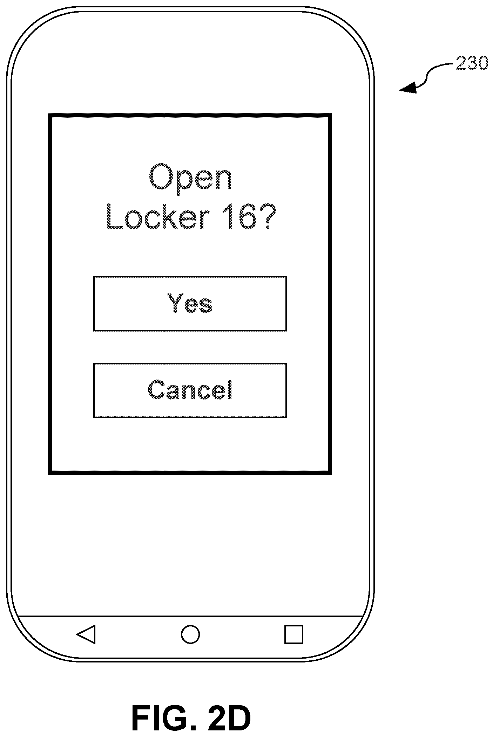

FIG. 2D is a diagram depicting an example of a user interface 230 for causing access to a storage unit 133 to be enabled. The user interface presents a dialog box that allows a user to select to enable access to the storage unit 133 (or to cancel). The storage application 127 can present this user interface 230 upon receiving notification of the reservation from the storage management service 127, upon detecting that the user device 106 is within a predefined proximity of the selected storage system 109, or upon detecting that the user device 106 is within a predefined proximity of the storage unit 133. The storage application 127 may determine that the user device 106 is within a predefined proximity of the selected storage system 109 using, for example, location services provided by an operating system of the user device 106. The storage application 127 may determine that the user device 106 is within a predefined proximity of the storage unit 133 based on, for example, the current position of the user device 106 relative to the storage unit 133 as determined using imagery captured by an image capture device of the user device 106 and mapping data 122.

### EXAMPLE PROCESS FOR ITEM PICK-UP

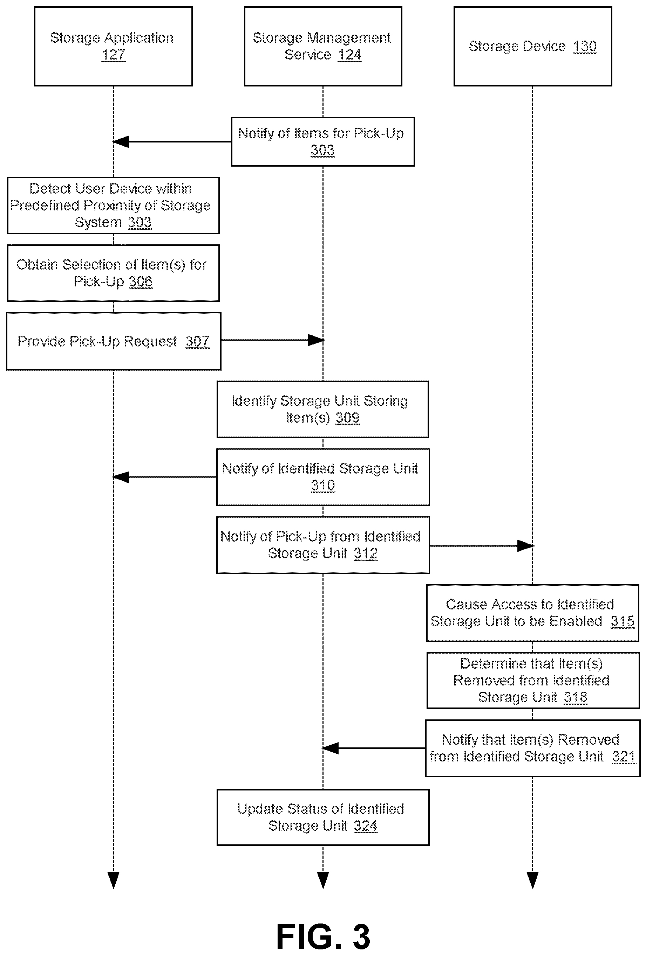

FIG. 3 is a sequence diagram that depicts an example of the operation of a portion of the components of the network environment 100, in an embodiment. The flow diagram of FIG. 3 provides merely an example of the many different types of functional arrangements that may be employed to implement the operation of the depicted portion of depicted components of the network environment 100.

At step 300, the storage management service 124 notifies the storage application 127 that a specified storage system 109 is storing one or more items for pick-up by a user of the user device 106. The storage management service 124 may generate the notification in response to the storage managements service 124 updating the storage data 118 when the one or more items are dropped off at the specified storage system 109. The notification may include, for example, an identifier of the specified storage system 109, an identifier of a user account associated with the user from the user data 121, and/or an identifier of a storage unit 133 storing the one or more items. In some implementations, the storage application 127 may present this notification to the user.

At step 303, the storage application 127 detects that the user device 106 is within a predefined proximity of a storage system 109. The storage application 127 may use location services or other geolocation systems provided by an operating system of the user device 106.

At step 306, the storage application 127 obtains a selection of one or more items for pick-up from the specified storage system 109. The storage application 127 may present a user interface in a display of the user device 106 that presents a user with an option to select an item or items for pick-up from among any items for the user stored in the specified storage system 109. The storage application 127 may identify the item or items are stored for the user in the specified storage system 109 based on the notification received at step 300, or by requesting that the storage management service 124 identify the item(s) in response to detecting that the user device 106 is within the predefined proximity of the specified storage system 109 at step 303. If the user has multiple items stored in the specified storage system 109 and ready for pick-up, the user can potentially select more than one of those items.

At step 307, the storage application 127 provides a pick-up request to the storage management service 124. The pick-up request may include, for example, an identifier of the user account, identifier(s) of the one or more items, an identifier of the specified storage system 109, and/or an identifier of a storage unit 133 storing the one or more items. The storage application 127 may not provide an identifier of the storage unit 133 storing the one or more items if the storage application 127 does not have access to this information, however.

At step 309, the storage management service 124 identifies a storage unit 133 that stores the one or more items. The identified storage unit 133 may be a part of the specified storage system 109. The storage management service 124 may identify the storage unit 133 using the storage data 118. The storage management service 124 may access storage data 118 associated with the specified storage system 109 and determine which of the storage units 133 of the storage system 109 stores the one or more items. The storage management service 124 may make this determination based on identifier(s) of the one or more items or an identifier of the user account-whichever is applicable depending on the implementation. The storage management service 124 may access an identifier of the identified storage unit 133 from the storage data 118. If the pick-up request included an identifier of the storage unit 133 storing the one or more items, though, the storage management service 124 may instead identify the storage unit 133 using that identifier.

At step 310, the storage management service 124 notifies the storage application 127 of the identified storage unit 133. The notification may include an identifier of the identified storage unit 133 from the storage data 118. In some implementations, the storage application 127 may use this information to generate an AR overlay that assists the user in locating the identified storage unit 133.

At step 312, the storage management service 124 notifies a storage device 130 of the storage system 109 that the one or more items are being picked up from the identified storage unit 133. This notification may include an identifier of the identified storage unit 133 from the storage data 118. The notification may also include instructions to enable access to the identified storage unit 133.

At step 315, the storage device 130 causes access to the identified storage unit 133 to be enabled. In some implementations, the storage device 130 may cause access to the identified storage unit 133 to be enabled in response receiving the notification of the pick-up at step 312. In other implementations, the storage device 130 may cause access to the identified storage unit 133 to be enabled only once the user device 106 is within a predefined proximity of the identified storage unit 133 or once the storage device 130 receives a request to enable access that originates from the user device 106. The storage device 130 may cause access to the identified storage unit 133 to be enabled by operating an access control unit connected to the identified storage unit 133.

At step 318, the storage device 130 determines that the one or more items have been removed from the identified storage unit 133. When the user has removed the one or more items from an interior of the identified storage unit 133, the storage device 130 may receive a signal indicating as much from the identified storage unit 133. This signal may be generated by a computing device linked to the identified storage unit 133 when, for example, a scale in the identified storage unit 133 detects that the one or more items have been removed from the scale; when a digital camera, proximity sensor, or other instrument in data communication with the linked computing device detects that the one or more items are no longer present in the interior of the identified storage unit 133; when the linked computing device detects that access to the identified storage unit 133 has been disabled; or when a predefined period of time has elapsed after the access control unit is operated to enable access to the identified storage unit 133 (such as if the user neglects to operate the access control device to disable access to the identified storage unit 133) .

At step 321, the storage device 130 notifies the storage management service 124 that the one or more items have been removed from the identified storage unit 133. This notification may include, for instance, an identifier of the identified storage unit 133, an identifier of the specified storage system 109, and an indication that one or more items have been removed from the identified storage unit 133.

At step 324, the storage management service 124 updates the status of the identified storage unit 133. The storage management service 124 may modify the storage data 118 to reflect that the identified storage unit 133 is no longer occupied and that the pick-up is complete.

While the example of FIG. 3 discusses a user picking up one or more items from one storage unit 133, the user may potentially select to pick up a plurality of items stored in a plurality of storage units 133. In that case, the storage management service 124 may identify a plurality of storage units 133 storing the plurality of items at step 309. Likewise, the storage management service 124 may notify the storage device 130 that the plurality of items are being picked up from the plurality of identified storage units 133 at step 312. Then, steps 315, 318, and/or 321 may be repeated one or more times to allow the user to pick-up the items successively.

### HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

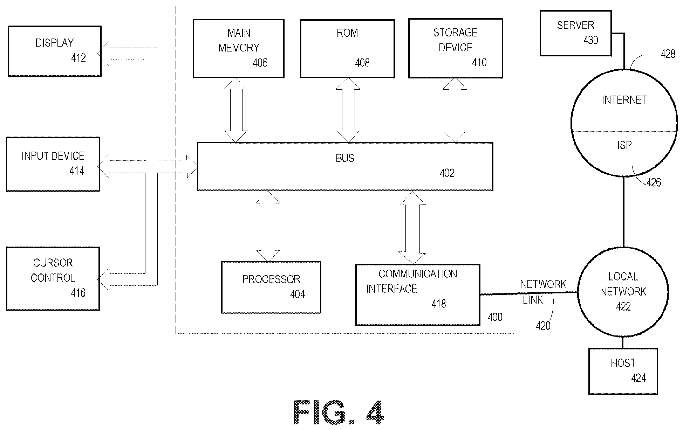

For example, FIG. 4 is a block diagram that illustrates a computer system 400 upon which an embodiment of the invention may be implemented. Computer system 400 includes a bus 402 or other communication mechanism for communicating information, and a hardware processor 404 coupled with bus 402 for processing information. Hardware processor 404 may be, for example, a general purpose microprocessor.

Computer system 400 also includes a main memory 406, such as a random access memory (RAM) or other dynamic storage device, coupled to bus 402 for storing information and instructions to be executed by processor 404. Main memory 406 also may be used for storing temporary variables or other intermediate information during execution of instructions to be executed by processor 404. Such instructions, when stored in non-transitory storage media accessible to processor 404, render computer system 400 into a special-purpose machine that is customized to perform the operations specified in the instructions.

Computer system 400 further includes a read only memory (ROM) 408 or other static storage device coupled to bus 402 for storing static information and instructions for processor 404. A storage device 410, such as a magnetic disk, optical disk, or solid-state drive is provided and coupled to bus 402 for storing information and instructions.

Computer system 400 may be coupled via bus 402 to a display 412, such as a cathode ray tube (CRT), for displaying information to a computer user. An input device 414, including alphanumeric and other keys, is coupled to bus 402 for communicating information and command selections to processor 404. Another type of user input device is cursor control 416, such as a mouse, a trackball, or cursor direction keys for communicating direction information and command selections to processor 404 and for controlling cursor movement on display 412. This input device typically has two degrees of freedom in two axes, a first axis (e.g., x) and a second axis (e.g., y), that allows the device to specify positions in a plane.

Computer system 400 may implement the techniques described herein using customized hard-wired logic, one or more ASICs or FPGAs, firmware and/or program logic which in combination with the computer system causes or programs computer system 400 to be a special-purpose machine. According to one embodiment, the techniques herein are performed by computer system 400 in response to processor 404 executing one or more sequences of one or more instructions contained in main memory 406. Such instructions may be read into main memory 406 from another storage medium, such as storage device 410. Execution of the sequences of instructions contained in main memory 406 causes processor 404 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical disks, magnetic disks, or solid-state drives, such as storage device 410. Volatile media includes dynamic memory, such as main memory 406. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 402. Transmission media can also take the form of acoustic or light waves, such as those generated during radio-wave and infra-red data communications.

Various forms of media may be involved in carrying one or more sequences of one or more instructions to processor 404 for execution. For example, the instructions may initially be carried on a magnetic disk or solid-state drive of a remote computer. The remote computer can load the instructions into its dynamic memory and send the instructions over a telephone line using a modem. A modem local to computer system 400 can receive the data on the telephone line and use an infra-red transmitter to convert the data to an infra-red signal. An infra-red detector can receive the data carried in the infra-red signal and appropriate circuitry can place the data on bus 402. Bus 402 carries the data to main memory 406, from which processor 404 retrieves and executes the instructions. The instructions received by main memory 406 may optionally be stored on storage device 410 either before or after execution by processor 404.

Computer system 400 also includes a communication interface 418 coupled to bus 402. Communication interface 418 provides a two-way data communication coupling to a network link 420 that is connected to a local network 422. For example, communication interface 418 may be an integrated services digital network (ISDN) card, cable modem, satellite modem, or a modem to provide a data communication connection to a corresponding type of telephone line. As another example, communication interface 418 may be a local area network (LAN) card to provide a data communication connection to a compatible LAN. Wireless links may also be implemented. In any such implementation, communication interface 418 sends and receives electrical, electromagnetic or optical signals that carry digital data streams representing various types of information.

Network link 420 typically provides data communication through one or more networks to other data devices. For example, network link 420 may provide a connection through local network 422 to a host computer 424 or to data equipment operated by an Internet Service Provider (ISP) 426. ISP 426 in turn provides data communication services through the world wide packet data communication network now commonly referred to as the "Internet" 428. Local network 422 and Internet 428 both use electrical, electromagnetic or optical signals that carry digital data streams. The signals through the various networks and the signals on network link 420 and through communication interface 418, which carry the digital data to and from computer system 400, are example forms of transmission media.

Computer system 400 can send messages and receive data, including program code, through the network(s), network link 420 and communication interface 418. In the Internet example, a server 430 might transmit a requested code for an application program through Internet 428, ISP 426, local network 422 and communication interface 418.

The received code may be executed by processor 404 as it is received, and/or stored in storage device 410, or other non-volatile storage for later execution.

In the foregoing specification, embodiments of the invention have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction.

### SOFTWARE OVERVIEW

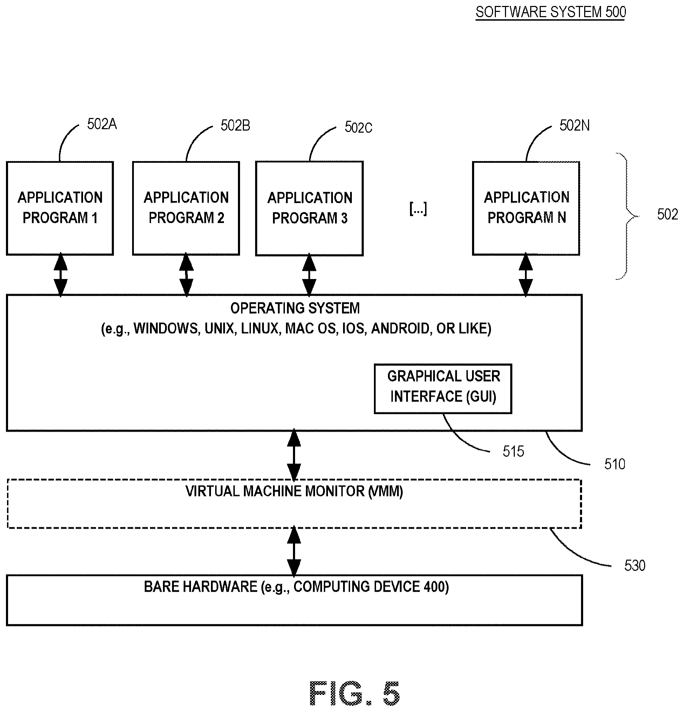

FIG. 5 is a block diagram of a basic software system 500 that may be employed for controlling the operation of computing system 400. Software system 500 and its components, including their connections, relationships, and functions, is meant to be exemplary only, and not meant to limit implementations of the example embodiment(s). Other software systems suitable for implementing the example embodiment(s) may have different components, including components with different connections, relationships, and functions.

Software system 500 is provided for directing the operation of computing system 400. Software system 500, which may be stored in system memory (RAM) 406 and on fixed storage (e.g., hard disk or flash memory) 410, includes a kernel or operating system (OS) 510.

The OS 510 manages low-level aspects of computer operation, including managing execution of processes, memory allocation, file input and output (I/O), and device I/O. One or more application programs, represented as 502A, 502B, 502C ... 502N, may be "loaded" (e.g., transferred from fixed storage 410 into memory 406) for execution by the system 500. The applications or other software intended for use on computer system 400 may also be stored as a set of downloadable computer-executable instructions, for example, for downloading and installation from an Internet location (e.g., a Web server, an app store, or other online service).

Software system 500 includes a graphical user interface (GUI) 515, for receiving user commands and data in a graphical (e.g., "point-and-click" or "touch gesture") fashion. These inputs, in turn, may be acted upon by the system 500 in accordance with instructions from operating system 510 and/or application(s) 502. The GUI 515 also serves to display the results of operation from the OS 510 and application(s) 502, whereupon the user may supply additional inputs or terminate the session (e.g., log off).

OS 510 can execute directly on the bare hardware 520 (e.g., processor(s) 404) of computer system 400. Alternatively, a hypervisor or virtual machine monitor (VMM) 530 may be interposed between the bare hardware 520 and the OS 510. In this configuration, VMM 530 acts as a software "cushion" or virtualization layer between the OS 510 and the bare hardware 520 of the computer system 400.

VMM 530 instantiates and runs one or more virtual machine instances ("guest machines"). Each guest machine comprises a "guest" operating system, such as OS 510, and one or more applications, such as application(s) 502, designed to execute on the guest operating system. The VMM 530 presents the guest operating systems with a virtual operating platform and manages the execution of the guest operating systems.

In some instances, the VMM 530 may allow a guest operating system to run as if it is running on the bare hardware 520 of computer system 500 directly. In these instances, the same version of the guest operating system configured to execute on the bare hardware 520 directly may also execute on VMM 530 without modification or reconfiguration. In other words, VMM 530 may provide full hardware and CPU virtualization to a guest operating system in some instances.

In other instances, a guest operating system may be specially designed or configured to execute on VMM 530 for efficiency. In these instances, the guest operating system is "aware" that it executes on a virtual machine monitor. In other words, VMM 530 may provide para-virtualization to a guest operating system in some instances.

A computer system process comprises an allotment of hardware processor time, and an allotment of memory (physical and/or virtual), the allotment of memory being for storing instructions executed by the hardware processor, for storing data generated by the hardware processor executing the instructions, and/or for storing the hardware processor state (e.g. content of registers) between allotments of the hardware processor time when the computer system process is not running. Computer system processes run under the control of an operating system, and may run under the control of other programs being executed on the computer system.

## Claims

1. A method comprising:
determining that a location of a user device is within a predetermined proximity of a storage system, wherein the user device is associated with a user account;
receiving a selection of an item from the user device;
identifying a storage unit, of the storage system, that stores the item; and
transmitting, to the storage system, an identification of the storage unit, and a command to cause access to the storage unit to be enabled, wherein the method is performed by one or more computing devices.

2. The method of claim 1, further comprising:
receiving, from the storage device, an indication that the storage unit no longer stores the item; and
updating data associated with the storage system to indicate that the storage unit no longer stores the item.

3. The method of claim 1, further comprising:
receiving an indication that the storage unit is storing the item; and
transmitting the indication that the storage unit is storing the item to the user device.

4. The method of claim 1, wherein the one or more computing devices communicate with the storage device via an application programming interface (API).

5. The method of claim 1, further comprising authenticating the user device based at least in part on one or more credentials associated with the user account.

6. The method of claim 1, wherein the storage device provides the identification of the storage unit to the user device.

7. The method of claim 1, wherein the user device:
accesses an image capture device of the user device;
causes the image capture device to capture visual input comprising one or more portions of a physical environment of the user device; and
renders, in a display of the user device, an augmented reality (AR) overlay over a presentation of visual input of the image capture device, wherein the AR overlay provides a visual indication of the storage unit within the physical environment and visually distinguishes the storage unit within the physical environment.

8. The method of claim 7, wherein the AR overlay further provides a visual indication of a location of the storage unit within the physical environment relative to a location of the user device.

9. The method of claim 1, wherein the storage device causes the storage unit to enable access to the storage unit in response to:
the user device being located proximate to the storage unit, or
receiving a request to enable access to the storage unit.

10. One or more non-transitory storage media storing instructions which, when executed by one or more computing devices, cause:
determining that a location of a user device is within a predetermined proximity of a storage system, wherein the user device is associated with a user account;
receiving a selection of an item from the user device;
identifying a storage unit, of the storage system, that stores the item; and
transmitting, to the storage system, an identification of the storage unit, and a command to cause access to the storage unit to be enabled.

11. The one or more non-transitory storage media of claim 10, wherein the instructions, when executed, further cause:
receiving, from the storage device, an indication that the storage unit no longer stores the item; and
updating data associated with the storage system to indicate that the storage unit no longer stores the item.

12. The one or more non-transitory storage media of claim 10, wherein the instructions, when executed, further cause:
receiving an indication that the storage unit is storing the item; and
transmitting the indication that the storage unit is storing the item to the user device.

13. The one or more non-transitory storage media of claim 10, wherein the user device:
accesses an image capture device of the user device;
causes the image capture device to capture visual input comprising one or more portions of a physical environment of the user device; and
renders, in a display of the user device, an augmented reality (AR) overlay over a presentation of visual input of the image capture device, wherein the AR overlay provides a visual indication of the storage unit within the physical environment and visually distinguishes the storage unit within the physical environment.

14. The one or more non-transitory storage media of claim 13, wherein the AR overlay further provides a visual indication of a location of the storage unit within the physical environment relative to a location of the user device.

15. The one or more non-transitory storage media of claim 10, wherein the storage device causes the storage unit to enable access to the storage unit in response to:
the user device being located proximate to the storage unit, or
receiving a request to enable access to the storage unit.
